Europäisches Patentamt

European Patent Office

Office européen des brevets

(19)

(11) Publication number: **0 370 017 B1**

# EUROPEAN PATENT SPECIFICATION

(12)

(45) Date of publication of patent specification: **09.12.92**

(21) Application number: **88903925.1**

(22) Date of filing: **11.05.88**

(86) International application number:
**PCT/IT88/00034**

(87) International publication number:
**WO 88/08866 (17.11.88 88/25)**

(51) Int. Cl.⁵: **C08L 95/00**, C08L 23/02,
//C08L23/06,C08L23/12,
C08L23/16,C08L91/00

(54) **PROCESS FOR PREPARING A MODIFIER FOR BITUMEN AND PRODUCT OBTAINED THEREFROM.**

(30) Priority: **12.05.87 IT 4791487**

(43) Date of publication of application:
**30.05.90 Bulletin 90/22**

(45) Publication of the grant of the patent:
**09.12.92 Bulletin 92/50**

(84) Designated Contracting States:
**AT BE CH DE FR GB IT LI LU NL SE**

(56) References cited:
**EP-A- 0 131 397**
**EP-A- 0 204 157**
**EP-A- 0 206 015**

(73) Proprietor: **INTERCHIMICA S.P.A.**
**Casella Postale 152**
**I-05100 Terni(IT)**

(72) Inventor: **BORIA, Luigi**
**Via Montanara, 25**
**I-05100 Terni(IT)**
Inventor: **BOTTALLI, Renato**
**Villaggio Polimer, 20**
**I-05100 Terni(IT)**
Inventor: **BROUSSARD, Gabriele**
**Via Oberdan, 17**
**I-05100 Terni(IT)**

(74) Representative: **Fiammenghi Domenighetti,**
**Delfina**
**Via Ouattro Fontane 31**
**I-00184 Rome(IT)**

EP 0 370 017 B1

## Description

This invention relates to a process for preparing a modifier adapted to mainly improve the physical-chemical, technological, mechanical properties of bitumen as well as the modifier provided by such a process.

Bitumen, which is formed of the residue of the natural or industrial oil evaporation, exhibits by nature the properties of being impermeable to water and other atmospheric agents as well.

It was really used up to 30-40 years ago either alone or together with a reinforcement of cardboard or fiber glass in the building industry as well as when a building should be protected.

Bitumen exhibits, however, some properties limiting its capability of being used such as e.g. the brittleness at temperatures even higher than 0°C, the tendency to be deformed (high penetrability, ductility) and so on. Therefore, modifiers directed to improve the most important properties have been studied for the last decades.

Generally these modifiers are formed of polymers of various kind showing better properties of cold-flexibility and mechanical strength as well.

Researches have been carried out for long time to provide such a modifier prepared by mixing different fractions of polyolefins.

A modifier able to improve the properties of the bitumen for the impermeabilization has been already prepared by mixing and melting at about 180°C suitable quantities of atactic polypropylene with the addition of additives, such as polypropylene wax, with small quantities of bitumen having the main function of fluidising and dying agent, and by cooling such a mixture.

However, it has been proved for years that manufacturers of polypropylene direct their efforts towards greater and greater yields of isotactic polypropylene to the detriment of the atactic fraction.

This invention seeks to provide a process and a product which can successfully replace the raw materials used as mentioned above for the production of conventional modifiers for bitumen.

The process of this invention seeks to replace those polypropylene fractions (atactic polypropylene) which can be found on the market with ever-growing difficulty with a mixture of hydrocarbons from the distillation of crude oil which is destined to form the socalled "lubricating fraction" of the additive for bitumen. In other words it is that fraction which distills between 200 and 500°C in the oil treatment.

In practice the isotactic polypropylene has been solubilized according to this invention with different kinds of oil, from the most fluid to the most viscous, from diathermic oils to piston oils, from lubricating motor oils to oils for compressors. It was experimentally found that by using materials thrown on the market with the name of "synthetic oils" the results could be perfectly compared with those achieved by using oils from petroliferous products. It was further found that the previous story of the used oil has no influence (i.e. whether it is pure, restored or exhausted oil) provided that it has kept its solvent capability.

It should be appreciated that by mixing suitable quantities of the above mentioned "lubricating fraction" with isotactic polypropylene a modifier for bitumen is produced having particular properties, i.e. the capability of providing a material which is extremely elastic at low temperatures, even much lower than 0°C. It was sufficient to add small quantities of atactic ethylene-propylene copolymer to the preceding mixtures to provide a modifier repeating or improving the physical-mechanical properties of the product of the previous art. The researches have been extended from such first experiments to all the available polyolefin polymers, in particular to the high and low density polyethylene, thus detecting that the "lubricating fraction" showed a remarkable solvent capability and a very good compatibility.

The use of the "lubricating fraction" has been extended with success to the polyolefin copolymers, polystyrene, polydiene and copolymers thereof. By using polydiene (natural or synthetic rubber) always together with the "lubricating fraction" and the isotactic polypropylene the use of atactic ethylene-propylene copolymers can be avoided, thus getting away from the by-products of the polymerization of the isotactic polypropylene.

Among the advantages in the production of a modifier for bitumen according to this invention besides the above mentioned, non-negligible possibility of replacing raw materials which are hardly to be found, following advantages are to be mentioned: the recycle of mineral or synthetic oils even though they are exhausted, said oils being available in large quantities; the capability of said oils to attack the above mentioned polymers which cannot be mixed with bitumen, thus causing the solubilization thereof; the better use, in the production of a modifier, of a raw material at the liquid state as far as the stockage, displacement, mixing and after all every step of the treatment thereof is concerned.

It should be further appreciated that the advantages coming from the constant qualities of oils of the "lubricating fraction", unlike the continuous variability of atactic polypropylene depending on the origin thereof, allow the quality of the waterproofing sheets as final products obtained with the bitumen provided

EP 0 370 017 B1

with additives according to the invention to be improved as far as the aging under atmospheric conditions and the mechanical properties, in particular the flexibility, is concerned. Therefore, this invention provides a process for preparing a modifier adapted to improve the properties of bitumen destined to waterproofing sheeths, impregnating products, conglomerates and featheredges, comprising following steps: mixing a "lubricating fraction" formed of either pure or restored or exhausted oils from the distillation of petroleum or synthetic oils with polymers which can be attacked by said "lubricating fraction" and mainly consisting of isotactic polypropylene, polyethylene and mixtures thereof as well as with other additives consisting of atactic propylene homopolymers and atactic ethylene-propylene copolymers, polystyrene, polydiene and bitumen, afterwards socalled "additives"; melting said mixture by increasing temperature up to about 180°C; casting and cooling said mixture in cakes or grains.

The modifier provided by the process of this invention can have following composition:

| lubricating fraction: | 1 - 85% |
| attackable polymers: | 1 - 70% |
| additives: | 1 - 90% |

The selection of specific percent values regarding each component is depending on the requested modifier, the function performed when mixed with bitumen as well as particular needs of users.

As a way of example some formulations are indicated:

| lubricating fraction: | 60 - 80% |
| attackable polymers: | 15 - 30% |
| additives: | 5 - 10% |

This is a more fluid modifier designed to be used as corrective agent for harder bitumen.

| lubricating fraction: | 30 - 55% |
| attackable polymers: | 35 - 50% |
| additives: | 10 - 20% |

Such modifiers can be used in combination with softer bitumen.

## Claims

1. Process for preparing a modifier for bitumen, characterized by the mixing of:
   a) a "lubricating fraction" essentially formed of mineral and synthetic, pure or restored or exhausted oils;
   b) polymers which can be attacked by said "lubricating fraction" and mainly consisting of isotactic polypropylene, polyethylene and mixtures thereof;
   c) additives consisting of atactic propylene homopolymers, atactic ethylene-propylene copolymers, polystyrene, polydiene and bitumen said resulting mixture being then melted, made homogeneous, cast and cooled in cakes or grains.

2. Process according to claim 1, characterized in that when said mixture is being mixed and made homogeneous, the temperature thereof is increased to about 180°C.

3. Modifier for bitumen, characterized by following composition:
   a) a "lubricating fraction" essentially formed of mineral and synthetic, pure or restored or exhausted oils;
   b) polymers which can be attacked by said "lubricating fraction" and mainly consisting of isotactic polypropylene, polyethylene and mixtures thereof;
   c) additives consisting of atactic propylene homopolymers, atactic ethylene-propylene copolymers, polystyrene, polydiene and bitumen.

4. Modifier for bitumen according to claim 3, characterized in that the "lubricating fraction" is in the range

3

between 1 and 85%.

5. Modifier for bitumen according to claim 3, characterized in that the attackable polymers are in the range between 1 and 70%.

6. Modifier for bitumen according to claim 3, characterized in that the additives are in the range between 1 and 90%.

7. Modifier for bitumen according to claims 4, 5 and 6, characterized in that the "lubricating fraction" is in the range between 60 and 80%, the attackable polymers are in the range between 15 and 30% and the additives are in the range between 5 and 10%.

8. Modifier for bitumen according to claim 4, 5 and 6, characterized in that the "lubricating fraction" is in the range between 30 and 55%, the attackable polymers are in the range between 35 and 50% and the additives are in the range between 10 and 20%.

9. Bitumen composition, in particular adapted for waterproofing sheeths, various impregnating products and conglomerates of featheredges, characterized in that it comprises a modifier for bitumen according to any claim 3 to 8.

**Patentansprüche**

1. Verfahren zur Herstellung eines Modifizierungsmittels für Bitumen, gekennzeichnet durch die Mischung von:
   a) einer "Schmiermittelfraktion", die im wesentlichen aus mineralischen und synthetischen, reinen oder wiedergewonnenen oder verbrauchten Ölen gebildet ist;
   b) Polymeren, die von der "Schmiermittelfraktion" angegriffen werden können und hauptsachlich aus isotaktischem Polypropylen, Polyethylen und Mischungen derselben bestehen;
   c) Zusatzmitteln, welche aus ataktischen Propylen-Homopolymeren, ataktischen Ethylen-Propylen-Copolymeren, Polystyrol, Polydien und Bitumen bestehen;
   wobei die erhaltene Mischung sodann geschmolzen, homogenisiert, zu Stücken oder Körnern gegossen und gekühlt wird.

2. Verfahren nach Anspruch 1, dadurch gekennzeichnet, daß, wenn die Mischung gemischt und homogenisiert ist, die Temperatur derselben auf etwa 180° C erhöht wird.

3. Modifizierungsmittel für Bitumen, gekennzeichnet durch folgende Zusammensetzung:
   a) eine "Schmiermittelfraktion", die im wesentlichen aus mineralischen und synthetischen, reinen oder wiedergewonnenen oder verbrauchten Ölen gebildet ist;
   b) Polymere, die von der "Schmiermittelfraktion" angegriffen werden können und hauptsächlich aus isotaktischem Polypropylen, Polyethylen und Mischungen derselben besteht;
   c) Zusatzmittel, welche aus ataktischen Propylen-Homopolymeren, ataktischen Ethylen-Propylen-Copolymeren, Polystyrol, Polydien und Bitumen bestehen.

4. Modifizierungsmittel für Bitumen nach Anspruch 3, dadurch gekennzeichnet, daß die "Schmiermittelfraktion" im Bereich zwischen 1 und 85 % vorhanden ist.

5. Modifizierungsmittel für Bitumen nach Anspruch 3, dadurch gekennzeichnet, daß die angreifbaren Polymere im Bereich zwischen 1 und 70 % vorhanden sind.

6. Modifizierungsmittel für Bitumen nach Anspruch 3, dadurch gekennzeichnet, daß die Zusatzmittel im Bereich zwischen 1 und 90 % vorhanden sind.

7. Modifizierungsmittel für Bitumen nach den Ansprüchen 4, 5 und 6, dadurch gekennzeichnet, daß die "Schmiermittelfraktion" im Bereich zwischen 60 und 80 %, die angreifbaren Polymere im Bereich zwischen 15 und 30 % und die Zusatzmittel im Bereich zwischen 5 und 10 % vorhanden sind.

8. Modifizierungsmittel für Bitumen nach den Ansprüchen 4, 5 und 6, dadurch gekennzeichnet, daß die "Schmiermittelfraktion" im Bereich zwischen 30 und 55 %, die angreifbaren Polymere im Bereich zwischen 35 und 50 % und die Zusatzmittel im Bereich zwischen 10 und 20 % vorhanden sind.

9.  Bitumenzusammensetzung, die insbesondere für wasserdichte Schichten und Folien, verschiedene Imprägnierungsprodukte und Konglomerate und scharfe Kanten geeignet ist, dadurch gekennzeichnet, daß sie ein Modifizierungsmittel für Bitumen nach einem der Ansprüche 3 bis 8 enthält.

**Revendications**

1.  Procédé pour préparer un modificateur pour bitume, caractérisé par le mélange de :
    (a) une fraction lubrifiante formée essentiellement d'huiles minérale et synthétique, pures ou régénérées ou usées ;
    (b) des polymères qui peuvent être attaqués par cette fraction lubrifiante et consistant princpalement en polyéthylène, polypropylène isotactique et leurs mélanges ;
    (c) des additifs consistant en homopolymères de propylène atactique, copolymères d'éthylène-propylène atactique, polystyrène, polydiène et bitume ;
    ce mélange résultant est ensuite fondu, rendu homogène, coulé et refroidi en gateaux ou grains.

2.  Procédé suivant la revendication 1, caractérisé en ce que lorsque le mélange est mélangé et homogénéisé, sa température est portée à environ 180°C.

3.  Modificateur pour bitume, caractérisé par la composition suivante :
    (a) une fraction lubrifiante formée essentiellement d'huiles minérale et synthétique, pures ou régénérées ou usées ;
    (b) des polymères qui peuvent être attaqués par cette fraction lubrifiante et consistant principalement en polyéthylène, polypropylène isotactique et leurs mélanges ;
    (c) des additifs consistant en homopolymères de propylène atactique, copolymères d'éthylène-propylène atactique, polystyrène, polydiène et bitume.

4.  Modificateur pour bitume suivant la revendication 3, caractérisé en ce que la fraction lubrifiante est dans une gamme comprise entre 1 et 85 %.

5.  Modificateur pour bitume suivant la revendication 3, caractérisé en ce que les polymères pouvant être attaqués sont dans la gamme comprise entre 1 et 70 %.

6.  Modificateur pour bitume suivant la revendication 3, caractérisé en ce que les additifs sont dans la gamme comprise entre 1 et 90 %.

7.  Modificateur pour bitume suivant les revendications 4, 5 et 6, caractérisé en ce que la fraction lubrifiante est dans la gamme comprise entre 60 et 80 %, les polymères pouvant être attaqués sont dans la gamme comprise entre 15 et 30 % et les additifs sont dans la gamme comprise entre 5 et 10 %.

8.  Modificateur pour bitume suivant les revendications 4, 5 et 6, caractérisé en ce que la fraction lubrifiante est dans la gamme comprise entre 30 et 55 %, les polymères pouvant être attaqués sont dans la gamme comprise entre 35 et 50 % et les additifs sont dans la gamme comprise entre 10 et 20 %.

9.  Composition de bitume, adaptée en particulier pour des feuilles d'imperméabilisation, divers produits d'imprégnation et des conglomérés de pièces taillées en biseau, caractérisée en ce qu'elle comprend un modificateur pour bitume suivant l'une quelconque des revendications 3 à 8.